# EUROPÄISCHE PATENTANMELDUNG

(11) **EP 1 610 251 A1**
(43) Veröffentlichungstag der Anmeldung: **28.12.2005**
(21) Anmeldenummer: 05013428.7
(22) Anmeldetag: 22.06.2005
(51) Int. Cl.: G06F 17/60

(54) **Verfahren und System zum computerimplementierten Verarbeiten von Datensätzen**

(30) Priorität: 23.06.2004 DE 102004031931
(71) Anmelder: BASF Aktiengesellschaft, 67056 Ludwigshafen (DE)
(72) Erfinder: Mattern, Rainer, 67165 Waldsee (DE)
(74) Vertreter: Hössle Kudlek & Partner

(57) **Zusammenfassung**

Verfahren und Computersystem zum Verarbeiten von planungsrelevanten Datensätzen, wobei zunächst planungsrelevante Datensätze aus unterschiedlichen Tabellen mindestens einer Datenbank mit operativen Planungsdaten in eine zentrale Tabelle eingelesen werden, die ein zentrales Mengenfeld und/oder ein zentrales Datumsfeld aufweist, und auf der Grundlage der erhaltenen zentralen Tabelle ein mehrdimensionaler Datenwürfel erzeugt und in einem Zentralspeicher eines Netzwerksystems gespeichert wird, und wobei zur Auswertung der mehrdimensionale Datenwürfel aus dem Zentralspeicher in eine Frontend-Anwendung geladen wird.

## Beschreibung

Die vorliegende Erfindung betrifft ein computerimplementiertes Verfahren und System zur Verarbeitung von Datensätzen. Insbesondere betrifft die Erfindung ein Verfahren und System zur automatisierten Unterstützung des Reportings und der Simulation bei der Absatz-, Produktions- und Beschaffungsplanung in einer Gesellschaft bzw. einem Unternehmen.

Bei Planungsprozessen in Unternehmen ist zwischen strategischer, operativer und taktischer Planung zu unterscheiden.

Strategische Planung findet i.d.R. gesellschafts-übergreifend, jährlich, mit einer Vorausschau auf mehrere Jahre und oft monetär statt. Da bei dieser Grobplanung verdichtete Datensätze schnell und unter verschiedenen Gesichtspunkten auszuwerten sind, kommen häufig Office-Anwendungen, beispielsweise Tabellenkalkulationsprogramme, wie Microsoft Excel®, zum Einsatz.

Operative, d.h. ausführende Planung, findet i.d.R. täglich und wöchentlich mit einer Vorausschau auf Tage oder Wochen statt. Es handelt sich dabei um eine Feinplanung, bei der i.d.R. ERP-Systeme (Enterprise Resource Planning), wie beispielsweise SAP/R3®, zum Einsatz kommen. Diese Systeme unterstützen die operative Planung unternehmensbezogen, auf unterster Ebene der Sortimentshierarchie, d.h. auf Artikelebene, und rein mengenmäßig.

Die taktische Planung verbindet die strategische und operative Planung. Sie findet i.d.R. monatlich mit einer Vorausschau auf mehrere Monate statt. Da die taktische Planung zwischen strategischer und operativer Ebene vermittelt, müssen Detaildaten der ERP-Systeme zur Verfügung stehen, die verdichtet betrachtet einen einfachen Abgleich zu strategischen Plänen erlauben.

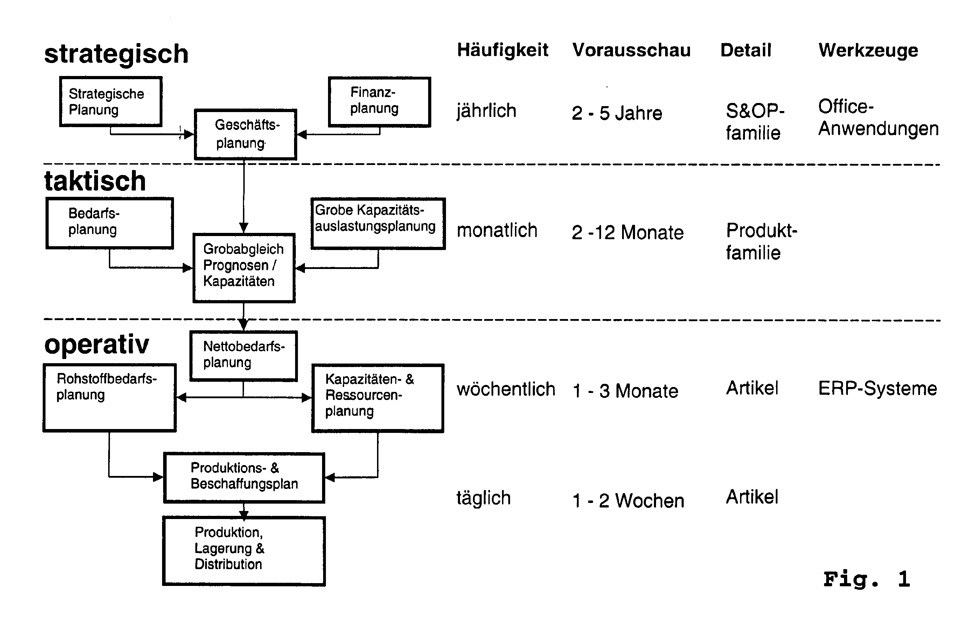

Gleichzeitig ist die taktische Planung funktionsübergreifend, da einerseits Strategen und Operative, andererseits verschiedene Unternehmenseinheiten, u.a. Marketing, Vertrieb, Materialwirtschaft und Produktion, involviert sind. Des weiteren kann der taktische Planungsprozeß aufgrund von Produktions- und Vermarktungsnetzwerken gesellschaftsübergreifend sein. Eine schematische grafische Darstellung der beschriebenen drei Planungsebenen ist in Figur 1 gezeigt.

Es ist festzuhalten, daß bislang keine datenverarbeitenden Systeme und Programme existieren, die in Unternehmen die Planungsfunktion auf taktischer Ebene unterstützen.

Demgegenüber werden hiermit ein Verfahren mit den Merkmalen des Anspruchs 1 und ein System mit den Merkmalen des Anspruchs 10 vorgeschlagen.

Das erfindungsgemäße Verfahren dient dem Verarbeiten und Auswerten von planungsrelevanten Datensätzen, vorzugsweise im Bereich der taktischen Planung.

In operativen ERP-Systemen liegen planungsrelevante Daten in funktional aufgeteilten und i.d.R. gesellschaftsspezifischen Systemen und Systemtabellen vor.

Auch Business-Warehouse-Systeme sind nach funktionalen Gesichtspunkten aufgeteilt, d.h. Informationen zu Beständen, Aufträgen, Absatzmengen, Prognosen, Budgets, Produktionsmengen, Bestellmengen etc. sind in separaten Systemtabellen gespeichert.

Alle planungsrelevanten Informationen werden erfindungsgemäß in einem ersten Verarbeitungsschritt aus den zahlreichen ERP-Systemtabellen in eine zentrale Tabelle, nachfolgend Kerntabelle genannt, eingelesen.

Im Gegensatz zu bekannten Ansätzen, in denen Datensätze aus nur einem Funktionsbereich dargestellt werden, basiert die Erfindung auf der Erkenntnis, daß planungsrelevante Daten aller Funktionsbereiche durch Abstraktion in einer Tabelle, der sogenannten erntabelle, bereitgestellt werden.

Der grundsätzliche Aufbau der Kerntabelle leitet sich prinzipiell aus der Fragestellung "Was ist wie, wann, wo und in welcher Menge planungsrelevant?" ab.
- Was: Um welches Element der Sortimentshierarchie handelt es sich (= bspw. Artikel)?
- Wie: Um welches Element handelt es sich (= Herkunft, z.B. "Bestellung", "Auftrag", "Prognose" und "Beschreibung")?
- Wann: Zu welchem Zeitpunkt ist das planerische Element relevant (= Datum)?
- Wo: In welcher organisatorischen Einheit oder geographischen Einteilung ist das Element relevant (bspw. Unternehmen, Werk, Region, Land)?
- Welche Menge: In welcher Menge ist das Element in der organisatorischen Einheit oder geographischen Einteilung planerisch relevant?

Planung bedeutet vereinfacht, Mengenveränderungen über einer Zeitachse zu berechnen. Wesentlicher Aspekt der Kerntabelle ist deshalb die Beschränkung auf ein planungsrelevantes Datumsfeld und ein planungsrelevantes Mengenfeld. Nachfolgend werden beide Felder als "zentrales Mengenfeld" und "zentrales Datumsfeld" bezeichnet.

Das zentrale Datumsfeld beinhaltet das planerisch relevante Datum des jeweiligen Elements. Alle anderen, planerisch nicht relevanten, Datumsfelder (wie bspw. Erstelldatum, Rechnungsdatum, Lieferdatum, Kundenwunschdatum) werden lediglich als Zusatzinformation in der Beschreibung des Elements betrachtet.

Das zentrale Mengenfeld beinhaltet die planerisch relevante Menge des jeweiligen Elements. Alle anderen, planerisch nicht relevanten, Mengenfelder (wie bspw. Liefermenge, Kundenwunschmenge, frei verfügbarer Bestand) werden gleichermaßen lediglich als Zusatzinformation in der Beschreibung des Elements betrachtet.

Das Einlesen der Datensätze in die Kerntabelle kann nach folgenden Regeln erfolgen:
- Nur planungsrelevante Datensätze werden berücksichtigt. Unter Planungsaspekten nicht relevante Datensätze werden verworfen.
- Die planungsrelevanten Datensätze werden auf detaillierter Ebene eingelesen.
- In das zentrale Mengenfeld ist die planungsrelevante Menge einzulesen, in das zentrale Datumsfeld das planungsrelevante Datum. Andere Mengen- und Datumsfelder dienen nur der erweiterten Beschreibung des planungsrelevanten Elements.
- Die planungsrelevante Menge ist vorzeichenrelevant. Planungsrelevante Zugänge weisen ein positives, planungsrelevante Abgänge ein negatives Vorzeichen auf.
- Sind Datensätze in mehrfacherer Sicht planerisch relevant, werden sie mehrfach eingelesen. Auf diese Weise werden in der Kerntabelle zwei oder auch mehrere Datensätze zu einem planerisch relevanten Ereignis gespeichert.

Erfindungsgemäß werden somit zur Unterstützung der taktischen Planung unternehmens- und funktionsübergreifende planungsrelevante Datensätze innerhalb einer einzigen Tabelle, der sogenannten Kerntabelle, bereitgestellt.

In einem zweiten Verarbeitungsschritt wird, basierend auf der Kerntabelle, ein mehrdimensionaler Datenwürfel erzeugt, der sich aus allen planungsrelevanten Datensätzen einer Unternehmensgruppe zusammensetzt.

Der erfindungsgemäße Datenwürfel weist typische Dimensionen wie Material, Organisation oder Zeit auf, wird jedoch wesentlich durch die Herkunft und Zeitstrahl genannten Dimensionen gekennzeichnet

Im folgenden wird die Erzeugung dieser beiden Dimensionen dargestellt.

Die Kerntabelle enthält detaillierte Information über die Herkunft eines Datensatzes. Mittels dieses Feldes und einer Zusatztabelle wird im Datenwürfel die Dimension Herkunft mit unterschiedlichen Merkmalen und Ausprägungen erzeugt.

Die Zuordnung der Datensätze zur Dimension Zeitstrahl erfolgt regelorientiert an Herkunft und zentralem Datumsfeld. Es existieren u.a. folgende Regeln:
- planungsrelevante Elemente aus den Funktionsbereichen Materialwirtschaft und Produktion (z.B. nicht gelieferte Kundenaufträge, offene Produktionsaufträge), die zeitlich vor Beginn des Zeitstrahls liegen, werden dem Anfangspunkt des Zeitstrahls zugeordnet.
- planungsrelevante Elemente aus den Funktionsbereichen Vertrieb und Marketing (z.B. Budgets, Prognosen, Absatzhistorie), die zeitlich vor Beginn des Zeitstrahl liegen, werden diesem Zeitstrahl nicht zugeordnet.
- planungsrelevante Elemente aller Funktionen, die zeitlich nach Ende des Zeitstrahl liegen, werden diesem nicht zugeordnet.

Der Inhalt des Datenwürfels wird um verschiedene kalkulatorische und bilanzielle Bewertungen des zentralen Mengenfelds erweitert, beispielsweise zu Herstell- oder Wiederbeschaffungskosten.

Gegenstand der Erfindung ist somit ein mehrdimensionaler Datenwürfel, der alle planungsrelevanten Datensätze mit den wesentlichen Dimensionen Herkunft und Zeitstrahl zur Verfügung stellt.

In einem dritten Verarbeitungsschritt werden alle Datensätze in ein Frontend, beispielsweise Microsoft Excel®, geladen. Im Frontend finden notwendige Berechnungen und die Auswertung sowie Darstellung der Datensätze in unterschiedlichen Planungssichten statt.

Die Erfindung erstreckt sich selbstverständlich auch auf Computerprogramme mit Programmcodemitteln, die dazu geeignet sind, bei Ablauf des Computerprogramms auf einem Computer ein erfindungsgemäßes Verfahren auszuführen, sowie auf computerlesbare Datenträgermedien mit darauf abgespeicherten erfindungsgemäßen Computerprogrammen und auf Computerprogrammprodukte mit derartigen computerlesbaren Datenträgermedien.

Weitere Vorteile und Ausgestaltungen der Erfindung ergeben sich aus der Beschreibung und der beiliegenden Zeichnung.

Es versteht sich, daß die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
- Figur 1: zeigt in schematischer Darstellung die drei Pla- nungsebenen strategische, operative und taktische Planung.
- Figur 2: zeigt eine leere Kerntabelle, in die planungsre- levante Datensätze eingelesen werden.
- Figur 3: zeigt eine gesellschafts- bzw. unternehmensüber- greifende Systemtabelle mit planungsrelevanten Datensätzen zum Einlesen in die Kerntabelle der Figur 2.
- Figur 4: zeigt die Kerntabelle der Figur 2 nach dem Einle- sen von Bestandsdaten aus der Tabelle der Figur 3.
- Figur 5: zeigt eine Auftragstabelle mit planungsrelevanten Datensätzen zum weiteren Einlesen in die Kernta- belle der Figur 4.
- Figur 6: zeigt die Kerntabelle der Figur 4 nach dem Einle- sen von Auftragsdaten aus der Tabelle der Figur 5.
- Figur 7: zeigt eine Prognosetabelle als weitere Tabelle mit planungsrelevanten Datensätzen zum Einlesen in die Kerntabelle der Figur 6.
- Figur 8: zeigt Zusatztabelle zu der Prognosetabelle der Figur 7.
- Figur 9: zeigt die Kerntabelle der Figur 6 nach dem Einle- sen von Prognosedaten aus der Prognosetabelle der Figur 7 und der Zusatztabelle der Figur 8.
- Figur 10: zeigt ein Beispiel für die Dimension "Herkunft" zum Erweitern der Kerntabelle und Erzeugen eines mehrdimensionalen Datenwürfels.
- Figur 11: zeigt ein Beispiel für die Dimension "Zeitstrahl" zum Erweitern der Kerntabelle und Erzeugen eines mehrdimensionalen Datenwürfels.
- Figur 12: zeigt ein Beispiel für eine Pivot-Tabelle zur Auswertung des erzeugten mehrdimensionalen Daten- würfels.

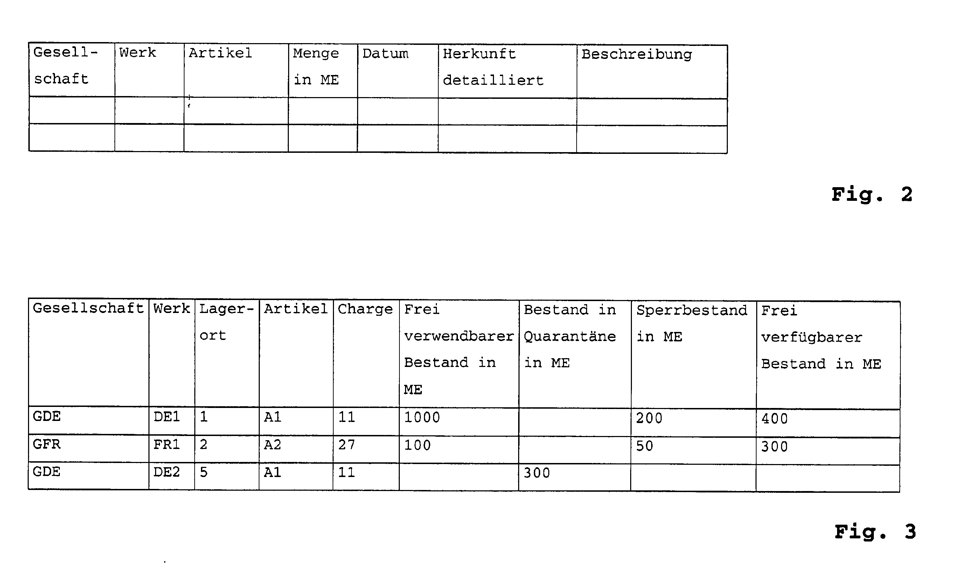

Unter Bezugnahme auf die Figuren 2 bis 9 wird nachfolgend beispielhaft das Einlesen der Datensätze aus verschiedenen Systemtabellen zum Erstellen der erfindungsgemäßen Kerntabelle beschrieben. Die Reihenfolge des Einlesens, die dargestellten Tabellen mit planungsrelevanten Informationen und die verwendeten Einleseregeln sind ebenfalls beispielhaft.

Figur 2 zeigt eine leere Kerntabelle in die planungsrelevante Datensätze eingelesen werden. Eine derart aufgebaute Kerntabelle ist für Unternehmen geeignet, die in verschiedenen Gesellschaften und Werken Artikel herstellen und vermarkten. Die einzelnen Spalten der Kerntabelle sind: "Gesellschaft" (= Unternehmen), "Werk", "Artikel" (= Produkt), "Menge in ME" (ME: Mengeneinheiten), "Datum", "Herkunft" und "Beschreibung".

Bei mehrstufiger Distributionsstruktur könnte in der Kerntabelle zwischen "produzierender Gesellschaft" und "vermarktender Gesellschaft" differenziert werden. Wie zu erkennen ist, verfügt die Kerntabelle erfindungsgemäß in jedem Fall über genau ein Datumsfeld und ein Mengenfeld. Es handelt sich hierbei um das zentrale Datumsfeld und das zentrale Mengenfeld.

Figur 3 zeigt eine gesellschaftsübergreifende Systemtabelle mit Bestandsdaten zu einem gegebenen Stichdatum, im gezeigten Beispiel zum 15. Februar 2004.
Die beispielhaft verfügbaren Dateninhalte der Tabelle sind "Gesellschaft", "Werk", "Lagerort", "Artikel", "Charge", "Frei verwendbarer Bestand in ME", "Bestand in Quarantäne in ME", "Sperrbestand in ME" und "Frei verfügbarer Bestand in ME".

Der erste Datensatz der Bestandstabelle enthält Bestandsdaten der Charge 11 des Artikels A1 im Werk DE1 der Gesellschaft GDE.

Der freie Bestand von 1.000 kg ist planerisch unmittelbar verwendbar. Deshalb wird die Menge 1.000 kg in das zentrale Mengenfeld und das Stichdatum 15. Februar 2004 in das zentrale Datumsfeld der Kerntabelle eingelesen. Als detaillierte Herkunft erhält der Datensatz in der Kerntabelle den Eintrag "Bestand frei" und wird mit "Bestand frei, Lagerort 1, Charge 11" beschrieben. Die Informationen Lagerort und Charge, für die in der Kerntabelle keine Spalten vorgesehen sind, werden in die Beschreibung aufgenommen und gehen auf diese Weise nicht verloren. Es kann jedoch bei späterer Auswertung kein Aufriss nach Lagerort oder Charge erfolgen. Ist die Information "Lagerort" für ein Unternehmen auch bei taktischer Planung relevant, muß die Kerntabelle um eine Spalte Lagerort erweitert werden. Die Erweiterung der Kerntabelle um eine Spalte Charge ist nicht sinnvoll, da taktische Planung auf Chargenebene nicht möglich ist.

Der erste Datensatz der Bestandstabelle beinhaltet eine weitere planungsrelevante Information, einen Sperrbestand von 200 kg. In der Kerntabelle wird deshalb eine weitere Datenzeile erzeugt.

In das zentrale Mengenfeld der zweiten Datenzeile wird die Menge 200 kg eingelesen, in das zentrale Datumsfeld ein weit in der Zukunft liegendes Datum (im Ausführungsbeispiel der 31.12.2050), da gesperrte Bestände für das beispielhafte Unternehmen nur langfristig zu berücksichtigen sind.

Berechnete Mengen der Bestandstabelle, wie eine frei verfügbare Menge (= Frei verwendbarer Bestand minus Bestand, der bereits einem Auftrag zugeordnet ist), werden nicht in die Kerntabelle eingelesen.

In analoger Weise werden aus dem zweiten Datensatz der Bestandstabelle die Datensätze 3 und 4 der Kerntabelle erzeugt. Aus dem dritten Datensatz der Bestandstabelle wird nur ein Datensatz in der Kerntabelle erzeugt, da dieser nur Bestand in Quarantäne in Höhe von 300 kg aufweist.

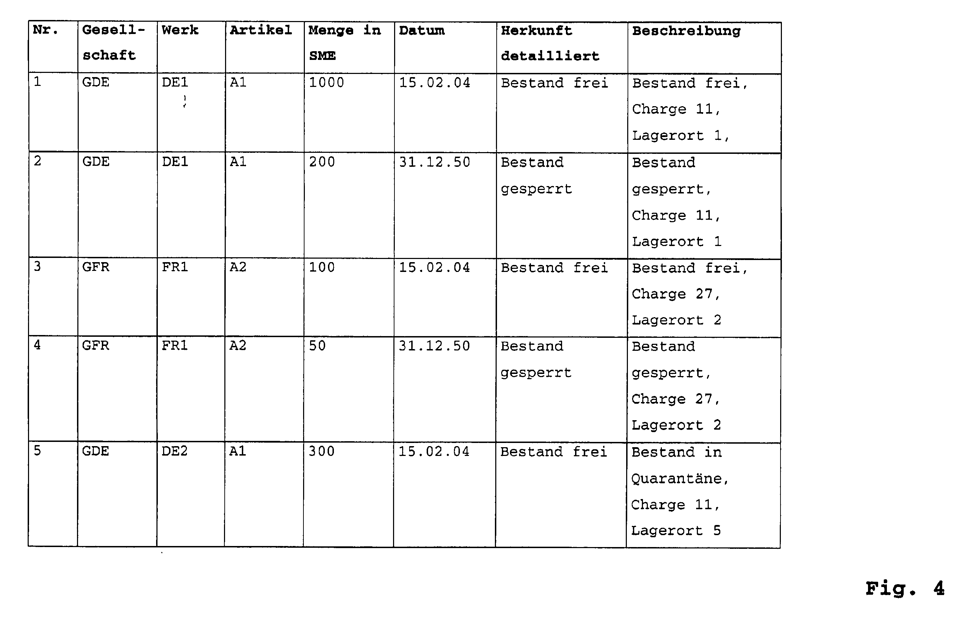

Die mit Bestandsdaten zum 15. Februar 2004 befüllte Kerntabelle ist in Figur 4 zu sehen.

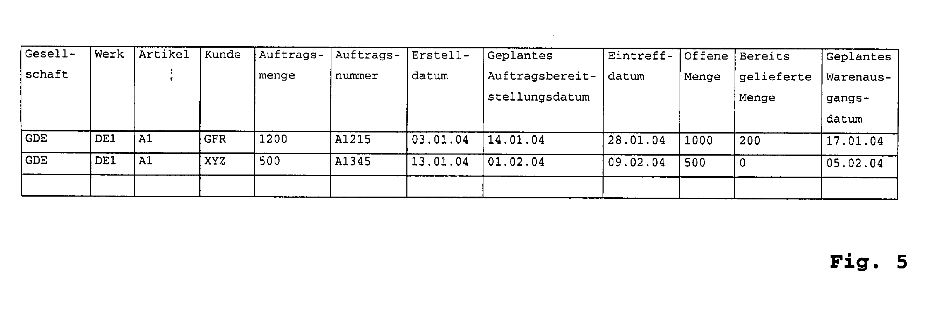

Figur 5 zeigt eine Auftragstabelle zum Stichtag 15. Februar 2004, deren Inhalt ebenfalls in die Kerntabelle eingelesen wird.

Die Spalten "Auftragsnummer" und "Kunde" der Auftragstabelle existieren - wie auch schon Lagerort und Charge - nicht in der Kerntabelle. Beide Informationen werden in das Feld "Beschreibung" mitgegeben. Planerisch relevant ist das Warenausgangsdatum, da zu diesem Zeitpunkt eine Mengenverringerung stattfinden wird. Das Warenausgangsdatum wird deshalb in das zentrale Datenfeld eingelesen. Die anderen Datumsfelder sind planerisch nicht relevant und werden teilweise in der Beschreibung mitgegeben. Planerisch relevant ist die offene Menge, nicht jedoch die gelieferte oder die ursprüngliche Auftragsmenge. Aus diesem Grunde wird nur die offene Menge in das zentrale Mengenfeld der Kerntabelle eingelesen.

Der Nachschubauftrag in dem dargestellten Ausführungsbeispiel von Gesellschaft GDE an Gesellschaft GFR ist in zweifacher Hinsicht Sicht planungsrelevant. Er stellt ein Abgangselement für die Gesellschaft GDE, bei der Gesellschaft GFR jedoch, zeitversetzt, ein Zugangselement dar. Der Nachschubauftrag erscheint in der Kerntabelle daher, sowohl als Zugangs- als auch als Abgangselement einmal auf das Zielwerk DE1, zum anderen auf das Ausgangswerk FR1 gerichtet. In Zeile 8 ist der Kundenauftrag für den Kunden XYZ aus der zweiten Zeile der Auftragstabelle eingelesen.

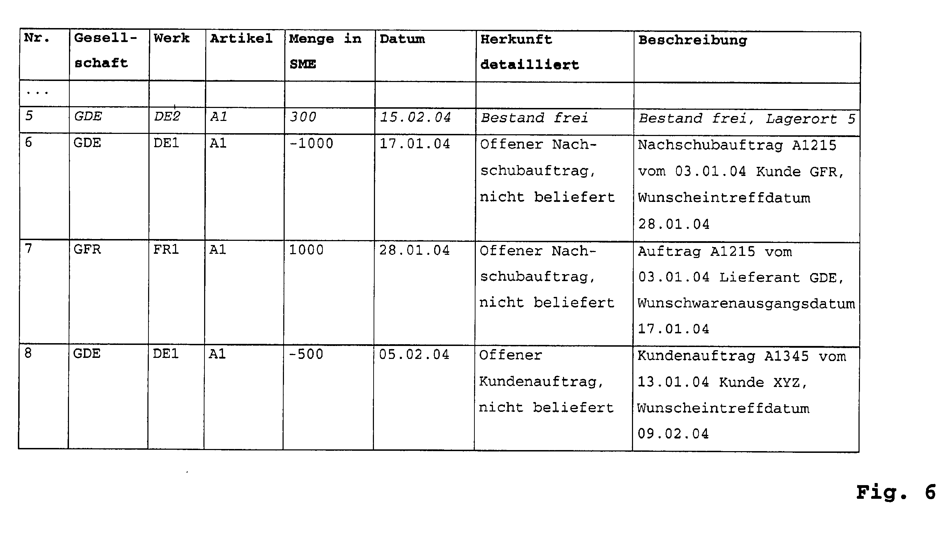

Das Ergebnis des Einlesens der Daten aus der Auftragstabelle in die Kerntabelle ist in Figur 6 dargestellt. Aus Gründen der Übersichtlichkeit sind die ersten vier bereits bekannten Datensätze weggelassen und zur Veranschaulichung des Übergangs von Bestandsdaten zu Auftragsdaten der fünfte Datensatz kursiv wiedergegeben. Die aus unterschiedlichen Systemtabellen stammenden Datensätze wurden übergangslos nacheinander in der Kerntabelle abgespeichert.

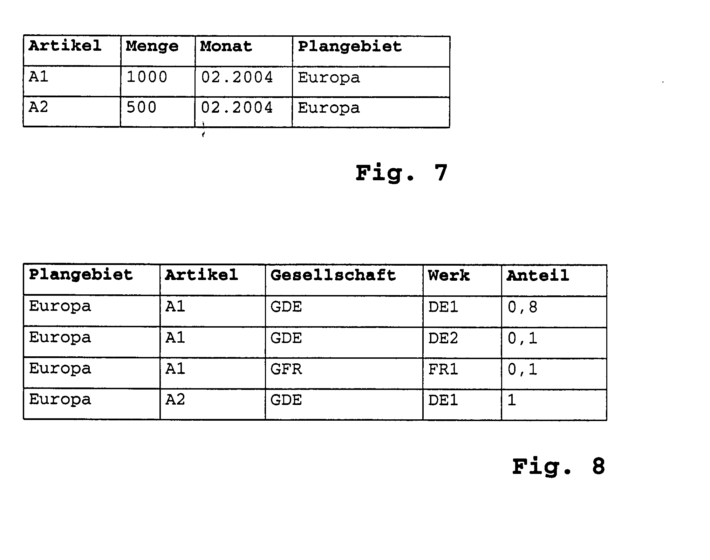

Figur 7 zeigt eine weitere Tabelle, die planungsrelevante Datensätze enthält und in die Kerntabelle einzulesen ist. Es handelt es sich um eine Prognosetabelle, ebenfalls zum Stichtag 15. Februar 2004.

Die Spalten der Prognosetabelle sind "Artikel", "Menge", "Monat" und "Plangebiet". Der Inhalt dient dazu, zukünftige Bedarfsmengen in die Planung einfließen zu lassen.

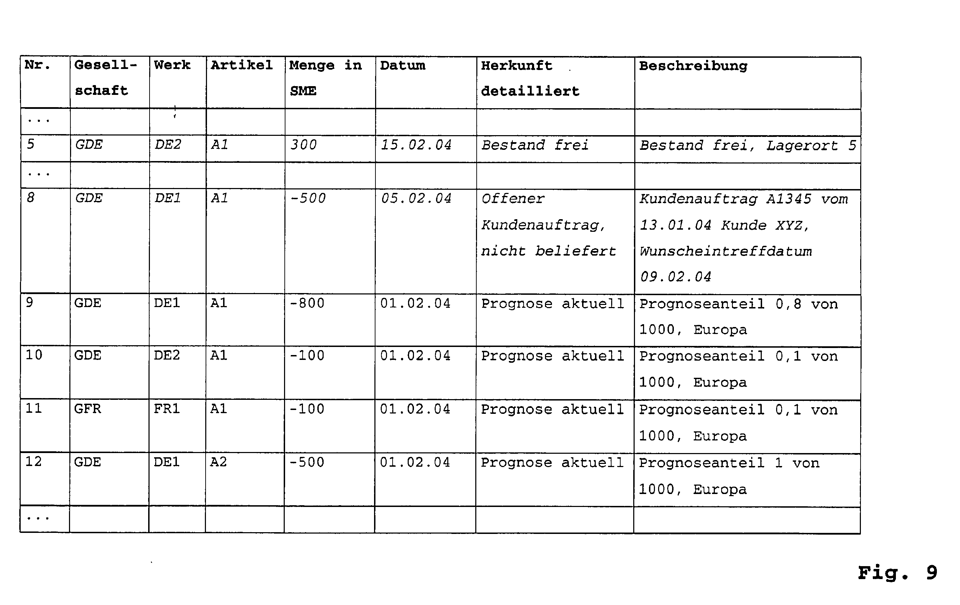

Da die Prognosetabelle keine Information über die Schlüsselung der Bedarfe auf Gesellschaften und Werke enthält, ist eine Zusatztabelle, wie in Figur 8 gezeigt, notwendig. Diese Tabelle mit den Spalten "Plangebiet", "Artikel", "Gesellschaft", "Werk" und "Anteil" enthält in Ergänzung zur Prognosetabelle Informationen darüber, welcher Bedarfsanteil von welcher Gesellschaft und welchem Werk prozentual gedeckt werden muß.

Die Datensätze der Prognosetabelle werden, unter Berücksichtigung der Zusatztabelle, in analoger Weise zu dem voranstehend beschriebenen erfindungsgemäßen Vorgehen in die Kerntabelle eingelesen.

Die Kerntabelle nach Einlesen der Datensätze aus der Prognosetabelle ist in Figur 9 gezeigt.

Beim Einlesen der Datensätze aus der Prognosetabelle und der Zusatztabelle ergibt der erste Datensatz der Prognosetabelle zu Artikel A1 im Planungsmonat 02.2004 die ersten drei Datensätze der Kerntabelle. Die Prognose von 1.000 kg wird entsprechend den prozentualen Anteilen der Zusatztabelle gesplittet.

Da Prognosen nur auf Monatsebene vorliegen, in der Kerntabelle jedoch ein Datum verlangt wird, erfolgt im dargestellten Ausführungsbeispiel eine Verteilung der Menge jeweils auf den Monatsersten. Es ist jedoch auch denkbar, die Aufteilung des Prognosezeitraums auf Wochen oder Tage vorzunehmen. Ähnliches Vorgehen findet beispielsweise auch bei Budgetzahlen statt, die i.d.R. nur auf Jahresebene vorliegen. Auch hier wird das Gesamtbudget mindestens auf Monate heruntergebrochen. Denkbar ist auch der Einsatz einer Zusatztabelle, die, bei der Aufteilung des Budgets auf Monate, Saisonalitätsfaktoren einfließen läßt.

Die Daten zu Artikel A2 ergeben eine einzige Zeile in der Kerntabelle, da dieser Artikel zu einem Anteil von 1,0 (d.h. ausschließlich) in Werk DE1 hergestellt wird.

Die Kerntabelle ist auf der Grundlage von drei unterschiedlichen Systemtabellen und einer Zusatztabelle mit Datensätzen befüllt worden. Analog werden weitere Systemtabellen, beispielsweise mit geplanten Produktionsmengen oder mit Absatzzahlen eingelesen.

Ein großer Vorteil des erfindungsgemäßen Vorgehens besteht darin, daß Datensätze aus den verschiedensten Quellsystemtabellen in eine Tabelle, der sogenannten Kerntabelle, eingelesen werden können.

In einem zweiten Verarbeitungsschritt wird die Kerntabelle um Dimensionen erweitert, mit der Absicht, einen mehrdimensionalen Datenwürfel zu erhalten. Zu bereits bekannten Dimensionen gehören u.a. Zeit, Organisation und Material, die in den folgenden Tabellen dargestellt sind:

### Dimension Zeit:

| **Datum** | **Tag** | **Woche** | **Monat** | **Quartal** | **Jahr** |
|---|---|---|---|---|---|
| 01.05.2004 | 01 | 18 | 05 | 02 | 2004 |
| | | | | | |

### Dimension Organisation:

| **Gesellschaft** | **Land** | **Region** |
|---|---|---|
| GDE | DE | EUROPA |
| GFR | FR | EUROPA |

### Dimension Material:

| **Artikel** | **Artikeltext** | **Produkt** | **Produktgruppe** | **Verkaufsgruppe** | **Sortimentsbereich** |
|---|---|---|---|---|---|
| A1 | Seife Waschgut 35g | Seife Waschgut | Kernseifen | Wasch- und Reinigungsmittel | Hygienebedarf |
| A2 | Waschlotion Supersauber 100ml | Waschlotion Supersauber | Flüssigseifen | Wasch- und Reinigungsmittel | Hygienebedarf |

Erfindungsgemäß werden die neuen Dimensionen Herkunft und Zeitstrahl ergänzt. Dies wird im folgenden erläutert.

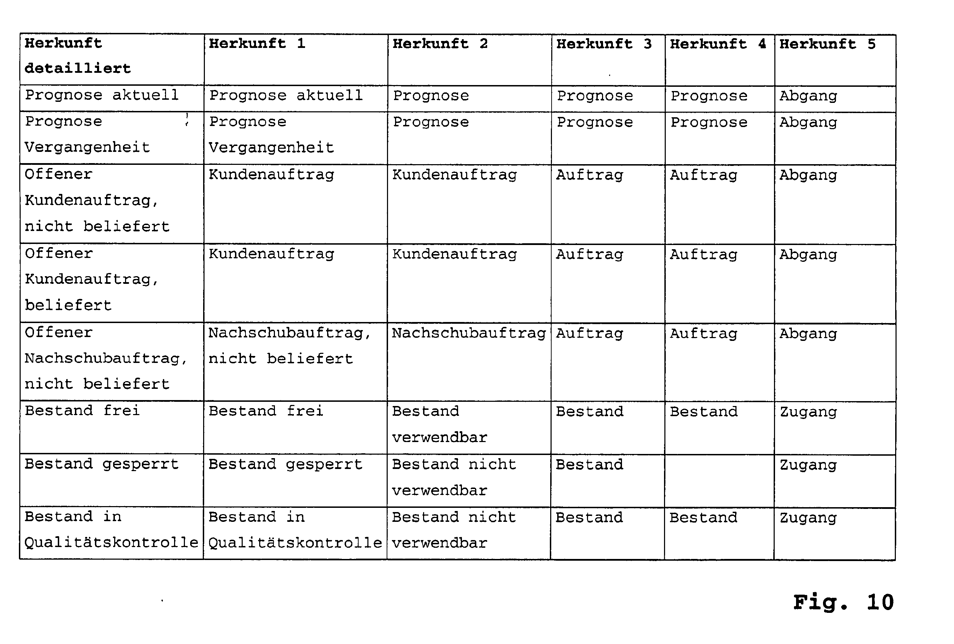

Ein Beispiel für die Dimension Herkunft ist in Figur 10 dargestellt. Diese Dimension gibt die Herkunft der entsprechenden Eintragungen bzw. Datensätze in der Kerntabelle an und ist variabel definierbar nach gewünschter Verdichtungsstufe und dem, was aus der Kerntabelle selektiert werden soll. Wenn man in dem dargestellten Ausführungsbeispiel die Herkunftshierarchie 3 wählt, wird nur zwischen Prognose, Bestand und Auftrag differenziert. In der Herkunftshierarchie 4 sind beispielsweise keine gesperrten Bestände enthalten.

Wie bereits erläutert, werden alle Elemente des Datenwürfels regelbasiert verschiedenen Zeitstrahlen zugeordnet. Um die Erfassung von Vergangenheits- und Zukunftsdaten auf einen Blick zu gewährleisten, sind auch Zeitstrahle möglich, in denen Zukunft und Vergangenheit überlagert sind. Ein beispielsweise um 12 Monate in die Zukunft verschobenes Element des Datenwürfels muß in der Dimension Herkunft eine entsprechende Herkunft erhalten, z.B. "Prognose Vorjahr". Weisen alle Zeitstrahle gleiche Längen auf, so ist die Erstellung von Sichten einfacher.

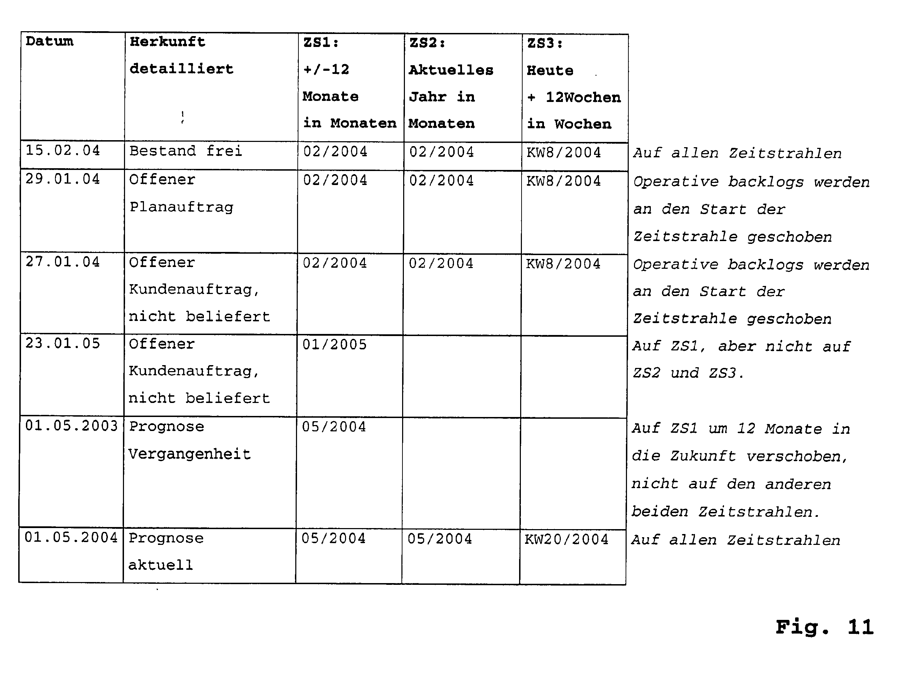

Ein Beispiel für die Dimension "Zeitstrahl" (ausgehend von dem Stichtag 15.02.2004) ist in Figur 11 gezeigt.

Der beschriebene Datenwürfel stellt Rohdaten im sogenannten "Backend"-System zur Verfügung. Zur Auswertung der Datensätze werden diese in einem dritten Verarbeitungsschritt einmalig aus dem Datenwürfel in das sogenannte Frontend-System, also den Benutzerrechner, geladen. Die Datendarstellungen erfolgen mittels einer Office-Software, die der Nutzer auf seinem Frontend-System betreibt, bspw. mittels eines Tabellenkalkulationsprogramms wie Microsoft Excel®.

Diese Auswertungen erfolgen erfindungsgemäß mit Hilfe von fest definierten Pivot-Tabellen (Kreuztabellen aus der Tabellenkalkulation) und angrenzenden Berechnungsfeldern.

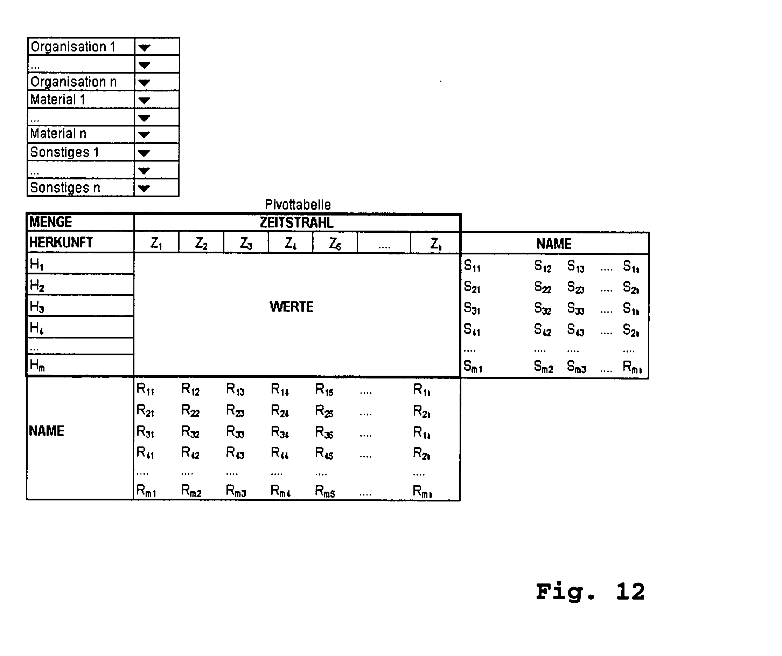

Ein mögliches Ausführungsbeispiel zeigt Figur 12, mit einer zentralen Pivot-Tabelle, mit horizontal aufgetragenem Zeitstrahl Z₁ bis Zₙ und vertikal aufgetragener Herkunft H₁ bis Hₘ. Durch Einschränkung der Dimensionen Herkunft und Zeitstrahl auf bestimmte Ausprägungen haben die Pivot-Tabellen immer die gleiche Größe.

Dieses erfindungsgemäße Vorgehen ermöglicht es, Berechnungen an der Oberfläche des Frontend-Systems durchzuführen, wobei der Datenwürfel im Backend-System dem Frontend-System die notwendigen Rohdaten zur Verfügung stellt. Berechnungen finden dann ausschließlich an der Oberfläche des Frontend-Systems statt, wodurch das erfindungsgemäße Verfahren individuelle, schnelle und flexible Auswertungen ermöglicht. Auch die graphische Darstellung der Daten findet mit einmal festgelegten Charts an der Frontend-Oberfläche statt, die jedoch einfach geändert werden können.

Das erfindungsgemäße Konzept stellt eine klare Abkehr von der üblichen Vorgehensweise in der Datenverarbeitung dar. In Datawarehouse-Systemen erfolgt Rechenleistung ausschließlich in Backend-Systemen, deren Arbeitsspeicher durch häufige Datenabfragen und Berechnungen belastet sind. Die erfindungsgemäße Idee, sich auf planungsrelevante Kerndaten zu beschränken, alle Daten einmalig in eine Frontend-Oberfläche zu laden und erst am Frontend-System Rechenoperationen durchzuführen, für die keine neue Serverabfragen notwendig sind, führt zu kostengünstigen, schnellen und flexiblen Abfragen und Auswertungen.

Die mit der Erfindung verbundenen Vorteile sind somit:
- Verbesserung der Planungsprozesse durch zentrale und einfache Bereitstellung von planungsrelevanten Daten in einem Datenwürfel;
- Aufgrund der Nutzung von Office Software am Frontend maximale Flexibilität und Datentransparenz bei minimalen Kosten;
- Verteilung der Rechenleistung auf zahlreiche Frontend-Server bzw. -Rechner mit drastischer Verkürzung der Wartezeit bei Datenauswertungen.

## Patentansprüche

1. Verfahren zum Verarbeiten von planungsrelevanten Datensätzen, wobei zunächst planungsrelevante Datensätze aus unterschiedlichen Tabellen mindestens einer Datenbank mit operativen Planungsdaten in eine zentrale Tabelle eingelesen werden, die ein zentrales Mengenfeld und/oder ein zentrales Datumsfeld aufweist, und auf der Grundlage der erhaltenen zentralen Tabelle ein mehrdimensionaler Datenwürfel erzeugt und in einem Zentralspeicher eines Netzwerksystems gespeichert wird, und wobei zur Auswertung der mehrdimensionale Datenwürfel aus dem Zentralspeicher in eine Frontend-Anwendung geladen wird.

2. Verfahren nach Anspruch 1, bei dem die unterschiedlichen Tabellen Systemtabellen eines ERP-Systems sind.

3. Verfahren nach Anspruch 1 oder 2, bei dem beim Einlesen von Datensätzen aus den unterschiedlichen Tabellen nur planungsrelevante Datensätze berücksichtigt und nichtplanungsrelevante Datensätze verworfen werden.

4. Verfahren nach einem der Ansprüche 1 bis 3, bei dem die planungsrelevante Menge in das zentrale Mengenfeld eingelesen wird.

5. Verfahren nach einem der Ansprüche 1 bis 4, bei dem das planungsrelevante Datum in das zentrale Datumsfeld eingelesen wird.

6. Verfahren nach einem der Ansprüche 1 bis 5, bei dem planerisch mehrfach relevante Datensätze mehrfach eingelesen werden.

7. Verfahren nach einem der Ansprüche 1 bis 6, bei dem zur Erzeugung des mehrdimensionalen Datenwürfels der zentralen Tabelle die Dimension "Herkunft" hinzugefügt wird.

8. Verfahren nach einem der Ansprüche 1 bis 7, bei dem zur Erzeugung des mehrdimensionalen Datenwürfels der zentralen Tabelle die Dimension "Zeitstrahl" hinzugefügt wird.

9. Verfahren nach einem der Ansprüche 1 bis 8, bei dem die Auswertung in einer Frontend-Anwendung mittels einer Pivot-Tabelle erfolgt.

10. Computersystem zum Verarbeiten von planungsrelevanten Datensätzen mit einem Zentralrechner und einem Zentralspeicher, auf dem mindestens eine Datenbank mit operativen Planungsdaten gespeichert ist, und mit mindestens einem mit dem Zentralrechner verbundenen Client mit einer Frontend-Anwendung, wobei zum Verarbeiten und Auswerten planungsrelevanter Datensätze ein Einlesen planungsrelevanter Datensätze aus unterschiedlichen Tabellen der mindestens einen Datenbank mit operativen Planungsdaten in eine zentrale Tabelle erfolgt, die ein zentrales Mengenfeld und/oder ein zentrales Datumsfeld aufweist, und auf der Grundlage der erhaltenen zentralen Tabelle die Erzeugung eines mehrdimensionalen Datenwürfels erfolgt, der in dem Zentralspeicher gespeichert wird, und wobei zur Auswertung der mehrdimensionale Datenwürfel aus dem Zentralspeicher in die Frontend-Anwendung geladen wird.

11. Computersystem nach Anspruch 10, bei dem die unterschiedlichen Tabellen Systemtabellen eines ERP-Systems sind.

12. Computersystem nach Anspruch 10 oder 11, bei dem beim Einlesen von Datensätzen aus den unterschiedlichen Tabellen nur planungsrelevante Datensätze berücksichtigt und nichtplanungsrelevante Datensätze verworfen werden.

13. Computersystem nach einem der Ansprüche 10 bis 12, bei dem die planungsrelevante Menge in das zentrale Mengenfeld eingelesen wird.

14. Computersystem nach einem der Ansprüche 10 bis 13, bei dem das planungsrelevante Datum in das zentrale Datumsfeld eingelesen wird.

15. Computersystem nach einem der Ansprüche 10 bis 14, bei dem planerisch mehrfach relevante Datensätze mehrfach eingelesen werden.

16. Computersystem nach einem der Ansprüche 10 bis 15, bei dem zur Erzeugung des mehrdimensionalen Datenwürfels der zentralen Tabelle die Dimension "Herkunft" hinzugefügt wird.

17. Computersystem nach einem der Ansprüche 10 bis 16, bei dem zur Erzeugung des mehrdimensionalen Datenwürfels der zentralen Tabelle die Dimension "Zeitstrahl" hinzugefügt wird.

18. Computersystem nach einem der Ansprüche 10 bis 17, bei dem die Auswertung in einer Frontend-Anwendung mittels einer Pivot-Tabelle erfolgt.

19. Computerprogrammprodukt mit einem computerlesbaren Medium und einem auf dem computerlesbaren Medium gespeicherten Computerprogramm mit Programmcodemitteln, die dazu geeignet sind, bei Ablauf des Computerprogramms auf einem Computersystem ein Verfahren nach einem der Ansprüche 1 bis 9 auszuführen.

20. Computerprogramm mit Programmcodemitteln, die dazu geeignet sind, bei Ablauf des Computerprogramms auf einem Computersystem ein Verfahren nach einem der Ansprüche 1 bis 9 auszuführen.
